**Europäisches Patentamt**

**European Patent Office**

**Office européen des brevets**

(19)

(11) Publication number: **0 055 464**
**B1**

# EUROPEAN PATENT SPECIFICATION

(45) Date of publication of patent specification: **29.10.86**

(51) Int. Cl.⁴: **B 29 C 45/08, B 29 D 17/00**

(21) Application number: **81110704.4**

(22) Date of filing: **23.12.81**

(54) Injection molding machine for the manufacture of information carrier discs.

(30) Priority: **26.12.80 JP 187765/80**

(43) Date of publication of application:
**07.07.82 Bulletin 82/27**

(45) Publication of the grant of the patent:
**29.10.86 Bulletin 86/44**

(84) Designated Contracting States:
**DE FR GB NL**

(56) References cited:
**DE-A-2 543 448**
**GB-A-1 336 792**
**US-A-2 657 429**
**US-A-3 335 464**
**US-A-3 806 294**
**US-E- 29 294**

(73) Proprietor: **Matsushita Electric Industrial Co., Ltd.**
**1006, Oaza Kadoma**
**Kadoma-shi Osaka-fu, 571 (JP)**

(73) Proprietor: **Teichiku Co., Ltd.**
**48-1, Nagahoribashisuji 1-chome**
**Minami-ku Osaka-shi Osaka-fu (JP)**

(73) Proprietor: **Nissei Plastic Industrial Co., Ltd.**
**2110, Oaza Nanjo, Sakajomachi**
**Hanishina-gun Nagano-ken (JP)**

(72) Inventor: **Omiya, Shoji**
**2-12-30, Okayama**
**Shijonawate-shi Osaka-fu (JP)**
Inventor: **Sunohara, Masaaki**
**4200-1, Shakusonji-cho**
**Hirakata-shi Osaka-fu (JP)**
Inventor: **Nakagawa, Tokiharu**
**1-31-6, Shodai Minamimachi**
**Hirakata-shi Osaka-fu (JP)**
Inventor: **Inagaki, Seiji**
**1202-43, Gojo-cho**
**Nara-shi Nara-ken (JP)**
Inventor: **Yamawaki, Junnosuke**
**250-3, Makinouchi**
**Sakurai-shi Nara-ken (JP)**

Courier Press, Leamington Spa, England.

EP 0 055 464 B1

**0 055 464**

(72) Inventor: **Nakamura, Nobuyuki**
**2557-8, Oaza Togura Togura-cho**
**Hanishina-gun Nagano-ken (JP)**
Inventor: **Yanagisawa, Kaoru**
**1588-2, Oaza Togura Togura-cho**
**Hanishina-gun Nagano-ken (JP)**


(74) Representative: **Eisenführ & Speiser**
**Martinistrasse 24**
**D-2800 Bremen 1 (DE)**

## Description

The present invention relates to an injection molding machine for the manufacture of an information carrier disc, which comprises a pair of fixed plates spaced apart from each other in face-to-face relation and connected by means of tie bars, a first mold carried by the first fixed plate, a movable plate movable between the fixed plates while guided by the tie bars, a second mold carried by the movable plate in face-to-face relation to the first mold, a first drive means mounted on the second fixed plate and operatively coupled with the movable plate for controlling the spacing between the first and second molds, and an injection cylinder displaceable in a direction axially of the first mold towards and away from the first mold.

From US—A—2,657,429 an injection molding machine is known which comprises a lower frame, to which an upper frame is secured by means of columns. While a lower mold is secured to the lower frame through a mold plunger and a table an upper mold is secured to the upper frame such that both molds are spaced apart from each other in face-to-face relation. Two cylinders are secured to the upper frame by means of columns and an injection plunger is adapted to move in one of those cylinders whereas a second double-action piston is adapted to move in the other of the cylinders, to which a container is secured by means of yokes and rods which container contains molten material which is to be injected between the molds. The known injection molding machine comprises three pressure systems of relatively different pressures for performing the movement of the parts of the machine and/or the molding with the said parts. During operation of the known injection molding machine the different pressures cause the molds in the direction of working such that the molds are closed and then a movable part serving for molding to move in the direction of working only when the molds have been closed with a predetermined force. After molding the pressure having the lowest value seves the molds return to their initial positions.

In this known injection-compression pressing machine, foreign matters tend to intrude easily through a bore defined on the top surface of the upper mold for the insertion of the injection plunger and tend to constitute a cause of the impairment of the stampers when they enter through the resin injection port in the mold during the upward movement of the injection plunger.

US—E—29,294 discloses an injection-compression pressing machine for the manufacture of gramophone discs or the like, which comprises an arrangement of three platens, including a movable intermediate platen carrying one mold half and a fixed platen carrying the other mold half, which platens are tied together by tie bars. The known injection-compression pressing machine further comprises drive means for moving the mold-carrying intermediate platen in respective positions with respect to the opposite mold half, and an injection cylinder displaceable in a perpendicular direction with respect to the main extension of the mold cavity, according to the first portion of claim 1.

However, since the known injection molding machine is constituted by a combination of a horizontally lying injector assembly and a vertical or upright mold clamper assembly, the use of the known injection molding machine for the manufacture of information carrier discs, particularly video discs requiring high quality standards to be satisfied, involves the following disadvantages and inconveniences:

Since the molds are supported in upright position, the record material injected tends to bias downwards by its own weight to such an extent as to result in a difficulty in making the information carrier disc of uniform thickness. The downward bias of the record material injected renders it difficult to adjust the clearance between the molds, the timing at which the molds are to be clamped together, the heating and cooling cycle and other molding conditions.

Since movable parts of one or both of the injector assembly and the mold clamper assembly give a weight acting horizontally on the guide unit and/or tie bars, the component parts of individual mechanisms must be of a large size sufficient to support such weight and, therefore, the machine itself is consequently large in size and requires a relatively large space for installation. While it is generally considered desirable to render the machine to be about 75 cm in height above the floor in order to facilitate the attachment and removal of the molds and the handling of the formed information carrier discs, the floor space below the injector and clamper assemblies become necessarily large and, therefore, the machine itself is very bulky. Since the molding of a video disc cannot be successfully performed with dusts floating in the surroundings, the molding machine is usually installed in a cleaned room and, therefore, the bulkiness of the machine itself and the requirement of the relative large space for installation pose an obstruction difficult to be removed.

Laborious and time-consuming procedures are required to remove and attach the molds because of the upright arrangement of the molds. In the case of the manufacture of the video discs, guide pins for the molds are used to perform the centering in order to improve the preciseness of centering of the opposite surfaces of the video discs. In this case, it is necessary that one of the molds should be supported for movement in a direction radially of the mold, and the consequence is that the total weight of the molds acts on the guide pins, rendering the known injection molding machine impractical.

GB—A—13 36 792 discloses an upright injection molding machine having a machine frame which pivotally supports a pair of fixing bars for locating a bolter which forms part of an upper mold. Furthermore a table is provided which carries a lower mold. A hydraulic cylinder assembly is supported on the frame and carries the table so that the latter can be elevated and lowered. The fixing bars pivotally fixed at the frame may be swung in a clockwise direction from the vertical positions thereof in order to provide an inspection position wherein the upper mold is in an inverted orientation. An injection means including an injection cylinder containing molding material and an injection nozzle communicating with the cylinder and through which molding material is injected into the mold is mounted on the upper mold. The injection nozzle is slidably received in the injection cylinder and spring means are provided so as to urge the cylinder nozzle to bear against opposite ends of a casing serving to house the injection means whereby the nozzle in part protrudes from the exterior of the casing.

The removal of unnecessary plasticized resin remaining inside the injection cylinder of the known injection molding machine is rather difficult and there is the disadvantage that excessive weight is imposed on the nozzle at the tip of the injection cylinder and also at the nozzle receptacle on the side of the mold such that damages may occur during the injection of molding material.

It is an object of the present invention to provide an upright injection-compression pressing machine for the production of information carrier discs or records of high quality which is small in size and requires only little space for installation, which prevents foreign matters from intruding into the mold and which ensures that the removal of unnecessary plasticized resin remaining inside the injection cylinder can be easily carried at a reduced height and wherein care is taken to avoid the possibility that an excessive weight is imposed on the nozzle at the tip of the injection cylinder and also at the nozzle receptacle on the side of the mold and which is, therefore, stabilized and substantially less susceptible to damage, thereby enabling it to be manufactured at a reduced cost.

This object is achieved by an injection molding machine of the above identified type in that said fixed plates are lower and upper fixed plates positioned one above the other while the first and second molds are upper and lower molds positioned one above the other, said first drive means being provided on the lower fixed plate and operatively coupled with the movable plate for moving the movable plate to any one of first, second and third positions wherein the carrier disc can be removed out of the clearance between the upper and lower molds, wherein the upper and lower molds are spaced a small distance from each other, and wherein the upper and lower molds are clamped together, respectively, and in that there is provided guide members mounted on the upper fixed plate so as to extend upwards, a holder assembly for the injection cylinder slidably and rotatably mounted on the guide members, a second drive means for driving the holder assembly along the guide members, said injection cylinder being supported as to extend vertically and having a rear end extending through the holder assembly, said injection cylinder a feed screw built therein, a screw drive means coupled with an upper end of the screw, a third drive means provided in the holder assembly for reciprocately driving the screw, a through-hole defined in the upper fixed plate in communication with a nozzle socket defined centrally in the upper mold, a first shielding sleeve mounted on the upper fixed plate so as to exteriorly surround the through-hole, and a second shielding sleeve having one end secured adjacent a nozzle of the injection cylinder and the other and opened, and having its diameter gradually increasing from said one end towards said other end, whereby when the holder assembly is lowered by said second drive means, the nozzle of the injection cylinder abuts against the nozzle socket so that a molding material can be supplied from the center of a disc forming portion of the upper mold, and at the same time, the other end of the second shielding sleeve closes an end of the first shielding sleeve.

Particular embodiments of the invention are specified in claims 2 to 6.

The features of the present invention will become apparent from the following description taken in conjunction with the preferred embodiments thereof with reference to the accompanying drawings, in which:

Fig. 1 is a front elevational view of an upright injection-compression pressing machine according to the present invention;

Fig. 2 is a side elevational view of the upright injection-compression pressing machine shown in Fig. 1;

Fig. 3 is a cross sectional view, on an enlarged scale, of an essential portion of the machine shown in Fig. 1;

Fig. 4 is a cross sectional view, on an enlarged scale, of an essential portion of the machine shown in Fig. 2;

Fig. 5(a) is a view similar to Fig. 3, showing a plasticized record material being injected in between a pair of stamper bearing molds;

Fig. 5(b) is a view similar to Fig. 3, showing the stamper bearing molds being clamped together;

Fig. 6 is a view similar to Fig. 2, showing the machine in different operative position;

Fig. 7(a) is a side sectional view of a portion of the machine adjacent the tip of an injection cylinder and its peripheral component parts, showing the removal of an unnecessary plasticized record material remaining in the injection cylinder;

Fig. 7(b) is a side elevational view, viewed in a different angle, of what is shown in Fig. 7(a);

Fig. 8 is a fragmental side view, on an enlarged scale, of what is shown in Fig. 7(a); and

Fig. 9 is a view similar to Fig. 3, showing a different embodiment of the present invention.

Before the description of the present invention proceeds, it is to be noted that like parts are designated by like reference numerals throughout the accompanying drawings.

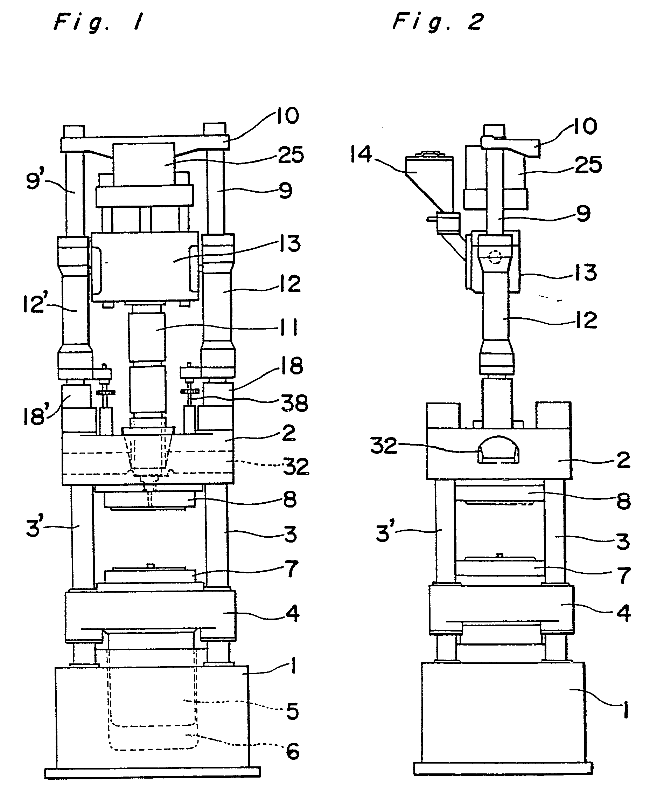

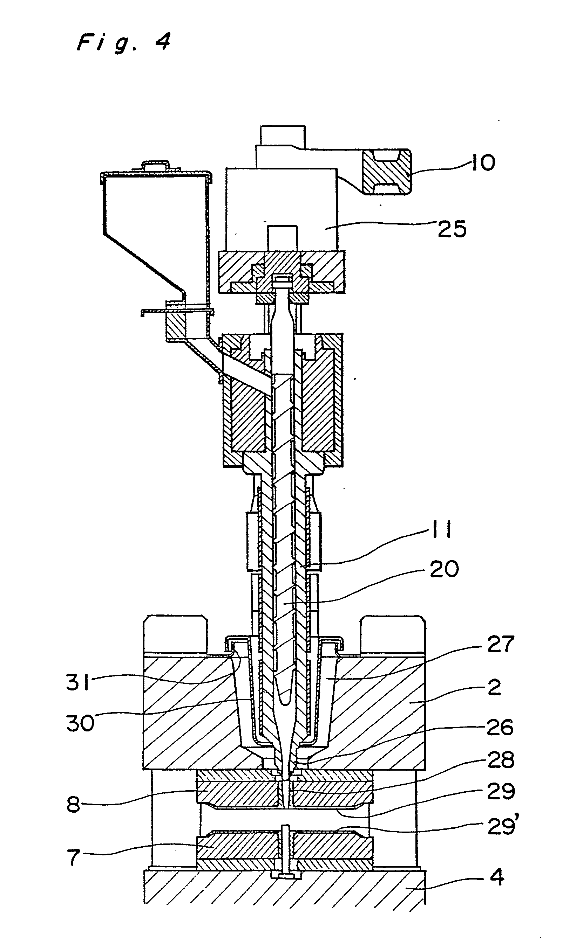

Referring first to Figs. 1 and 2, reference numerals 1 and 2 represent lower and upper fixed plates, respectively, said lower and upper fixed plates 1 and 2 being connected in spaced relation to each other by means of tie bars 3 and 3'. Reference numeral 4 represents a movable plate slidably supported on the tie bars 3 and 3' for movement in a vertical direction between the lower and upper fixed plates 1 and 2 by the action of a mold clamper mechanism incorporated in the lower fixed plate 1 and constituted by a first drive means comprising a ram 5 and a cylinder 6. Reference numeral 7 is a lower second mold fixedly carried by the movable plate 4 and adapted for the formation of an information carrier disc in cooperation with an upper first mold 8 fixedly carried by the upper fixed plate 2. These first and second molds 7 and 8 constitute a second drive means which concurrently serves as a sliding mechanism for moving the mold clamper mechanism in a vertical direction along guide shafts 9 and 9'. Reference numeral 14 is a hopper from which a record material is supplied onto an injection cylinder 11 through a holder assembly 13 extending in parallel to the injection cylinder 11 as shown in Fig. 4.

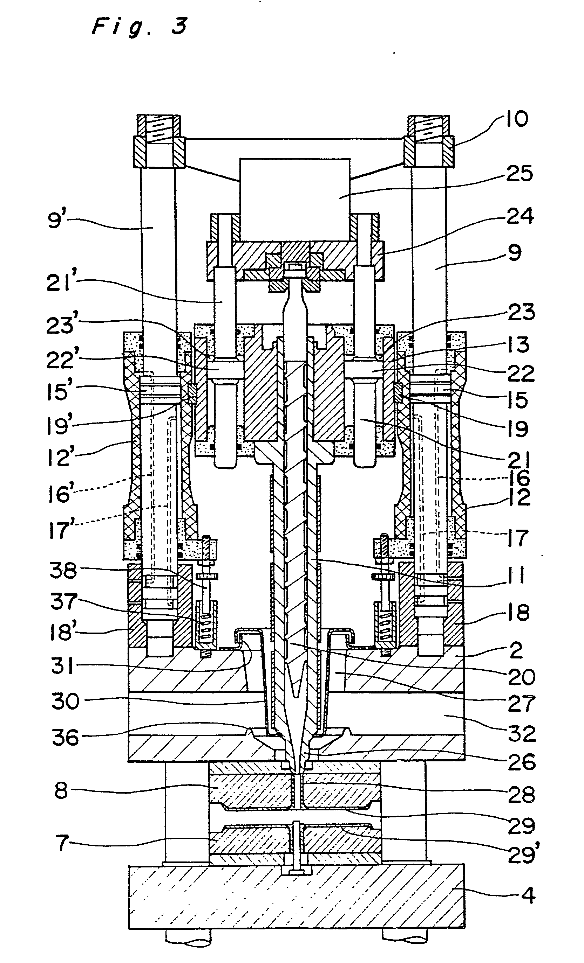

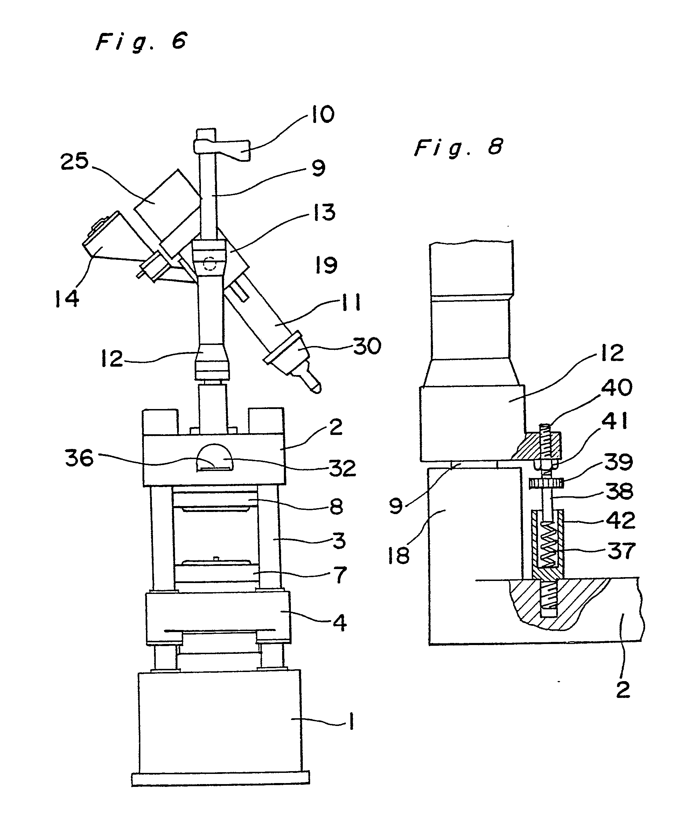

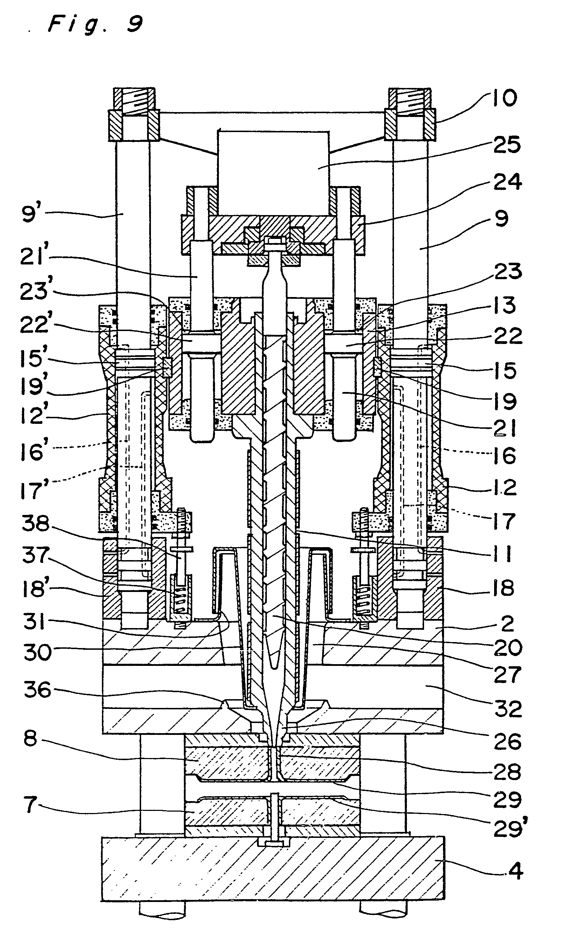

Reference numeral 38 represents a biasing force adjusting mechanism, the details of which will be described later with reference to Figs. 3 and 8. Reference numeral 32 represents a removal manhole defined in the upper fixed plate 2 for the removal of an unnecessary plasticized record material remaining in the injection cylinder, the details of which will be described later with reference to Figs. 3 and 6.

The second drive means and arrangement peripheral to the injection cylinder 11 will now be descirbed with particular reference to Fig. 3.

Referring to Fig. 3, mounted on the guide shafts 9 and 9' are piston members 15 and 15' together with drive cylinders 12 and 12'. The piston members 15 and 15' are rigidly connected to the respective guide shafts 9 and 9' and are axially slidably accommodated within the associated drive cylinders 12 and 12'. Each of the guide shafts 9 and 9' has elevating and descending fluid passages 16, or 16', and 17, or 17', defined therein in communication with respective working chambers defined between the drive cylinder 12 or 12', closed by the associated piston member 15 or 15', and the guide shaft 9 or 9', said passages 16 or 16', and 17 or 17', being in turn communicated through a corresponding support block 18 or 18' which is provided on the upper fixed plate 2 for the support of the guide shaft. The holder assembly 13 is controlled by a second drive means, which is constituted by upper portions of the drive cylinders 12 and 12' and a hydraulic control circuit, so as to move between a removal position, in which the both are spaced in readiness for the removal of the information carrier disc as shown in Fig. 1, and a clamped position, in which the both are pressed against each other, past an intermediate position in which the both are spaced a predetermined distance during the injection of the record material.

Means for elevating the lower mold 7 from the removal position to the intermediate position is so constructed that the lower mold 7 can be elevated at a relatively high speed by an ordinarily employed auxiliary cylinder, thereby rendering the molding to be completed in a relatively short period of time. Reference numerals 9 and 9' represent guide shafts extending in parallel relation to each other and mounted on lateral portions of the upper fixed plate 2 so as to extend vertically, the upper ends of the respective guide shafts 9 and 9' opposite to the upper fixed plate 2 being so connected together by means of a support member 10 while said guide shafts 9 and 9' guide the injection cylinder 11 to enable the latter to move vertically.

The guide shafts 9 and 9' have the hydraulically operated drive cylinders 12 and 12' mounted slidably thereon, to which drive cylinders 12 and 12' the holder assembly 13 for the carriage of the injection cylinder 11 is rigidly secured. The drive cylinders 12 and 12' are rotatably mounted on the holder assembly 13 through bearings 19 and 19' so that, as shown in Fig. 6, both of the holder assembly 13 and the injection cylinder 11 extending in parallel to said holder assembly 13 can rotate about the bearings 19 and 19' for facilitating the removal of a screw 20 extending inside the cylinder 11 in parallel relation thereto and/or the cleaning and maintenance of the injection cylinder 11. Normally, the drive cylinders 12 and 12' and the holder assembly 13 are fixed by a lock mechanism (not shown) in position with the injection cylinder 11 extending in a vertical direction perpendicular to the upper fixed plate 2.

Thus, the second drive means, while the cylinders 12 and 12' and the guide shafts 9 and 9' support both of the holder assembly 13 and the injection cylinder 11 in balanced condition, concurrently serves as the sliding mechanism for upwardly and downwardly moving, the mechanism can be simplified with the reduced weight and, therefore, the height can be reduced. In addition, since the holder assembly 13 serves as a connecting member for connecting the drive cylinders 12 and 12' together while the holder assembly 13 is connected thereto through the bearings 19, thereby serving as a mechanism for rotating the injection cylinder 11, the mechanism is simplified with the reduced weight.

Referring still to Fig. 3, the holder assembly 13 is provided with piston areas 22 and 22', rigidly mounted on corresponding piston rods 21 and 21', and hydraulic cylinders 23 and 23', upper ends of said piston rods 21 and 21' being connected to a support plate 24 which carries a third or screw drive means 25 thereon, said screw drive means 25 being operatively coupled to the feed screw 20 extending through the support plate 24, thereby constituting a third drive means. The injection cylinder 11 has its upper end extending coaxially through the holder assembly 13 so as to extend in the vertical direction with its lower end formed into an injection nozzle 26. This nozzle 26 extends through an aperture 27 defined at a central region of the upper fixed plate 2 and is urged under a predetermined pressure against a nozzle socket 28 defined centrally in the upper mold 8.

The nozzle socket 28 also serves to align and support the stamper at a central area in contact with the upper mold 8, said stamper 29 being known as a positive disc in which signal or video information to be reproduced on the information carrier disc is recorded. Reference numeral 29' represents another stamper mounted on the lower mold 7. The details of a method of mounting the stamper 29 on the upper mold 8 in tight contact with the nozzle socket 28 will not be herein described.

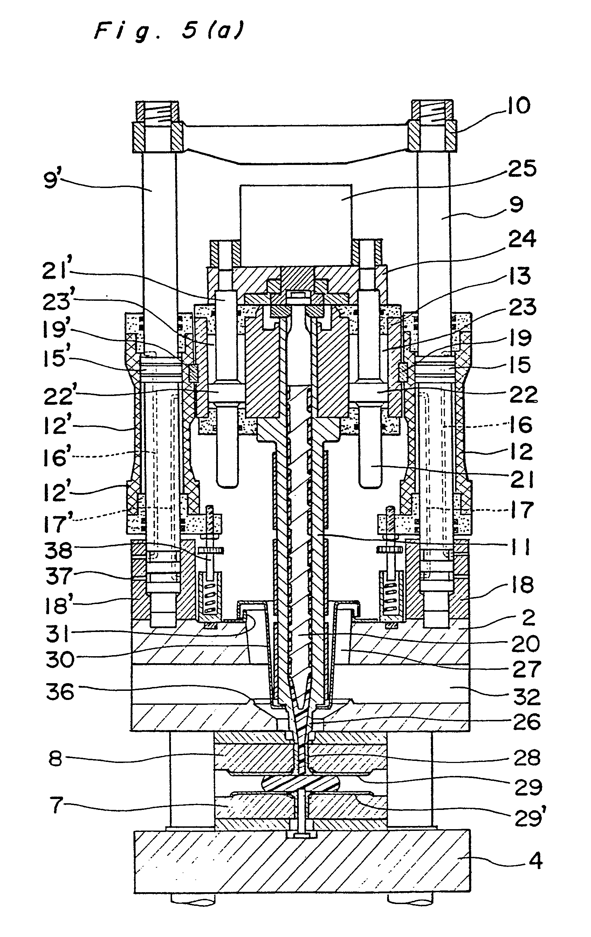

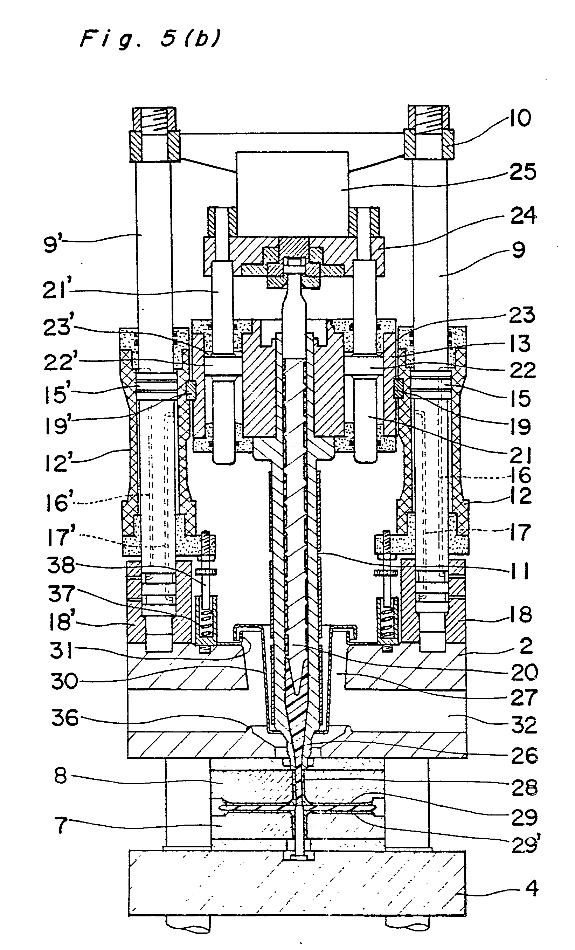

Since the third drive means is so constructed that both of the piston rods 21 and 21' and the cylinders 23 and 23' are arranged so as to extend in spaced and parallel relation to each other and also to the feed screw 20 and any one of the drive cylinders 12 and 12' forming the second drive means, the overall height of the machine can be reduced and, accordingly, the machine itself can be manufactured in a compact size. In Fig. 3, the feed screw 20 is shown as held in a position ready to inject the record material in between the molds 7 and 8, whereas the feed screw 20 shown in Fig. 5a is held in a position wherein the record material is being injected in between the molds 7 and 8 from the tip of the screw 20 with the piston rods 21 and 21' being downwardly shifted. Each of the molds 7 and 8 may be of a construction either adapted to be cyclically heated and cooled by steam and water as is the case in the conventional compression molding machine or adapted to be heated to a predetermined temperature as is the case in the conventional injection molding machine.

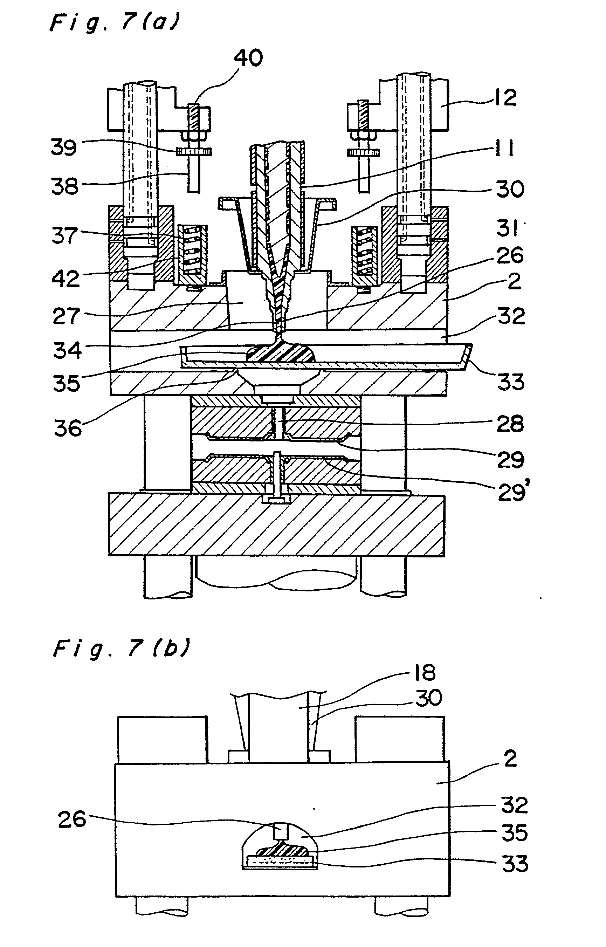

Reference numeral 30 represents a shielding sleeve having one lower end secured to the lower end of the injection cylinder 11 and an upper end turned downwards so as to enclose an upright flange portion of a shielding sleeve 31 rigidly mounted on the upper fixed plate 2. It is to be noted that the lower end of the shielding sleeve 30 secured to the lower end of the injection cylinder 11 is so secured as to avoid any possible intrusion of foreign matters towards the tip of the injection cylinder 11 adjacent the nozzle. It is also to be noted that, as shown in Fig. 9, any one of the downwardly turned upper end of the shielding sleeve 30 and the upright flange portion of the shielding sleeve 31 may be so lengthened that they can be kept in overlapping relation to each other even when the injection cylinder 11 has been upwardly shifted. The arrangement of the shielding sleeves 30 and 31 as shown in Fig. 9 is advantageous in that the removal of the unnecessary plasticized record material remaining inside the injection cylinder 11 can readily be carried out with the use of a removal tray 33 as will be described later with reference to Fig. 7.

The manhole 32 is formed in the upper fixed plate 2 at a position intermediately of the thickness thereof so as to horizontally extend at right angles to an opening 27 defined therein for the passage of the lower portion of the injection cylinder 11 therethrough during the upward and downward movement of the injection cylinder 11, said manhole 32 having a semicircular cross-sectional representation as shown in Fig. 7. The manhole 32 has a plain bottom wall formed with an annular projection 36 in alignment with the opening 27 in the upper fixed plate 2, said annular projection 36 serving to prevent foreign matters entering the manhole 32 to fall downwards through the opening 27. Fig. 7 illustrates the condition in which, while the injection cylinder 11 is upwardly shifted, the removal tray 33 is inserted into the manhole 32 for the receipt of the unnecessary plasticized record material which is, subsequent to the insertion of the tray 33 into the manhole 32, injected onto the tray 33. Reference numerals 34 and 35 represents the unnecessary plasticized record material so injected onto the removal tray 33. In this condition, since the tray 33 rests on the annular projection 36 formed on the plain bottom wall, any foreign matter falling through the opening 27 has no possibility of further falling downwards towards the bottom of the opening 27 and then towards the clearance between the stampers 29 and 29' through an aperture in the nozzle socket 28. In this way, any possible impairment of one or both of the stampers 29 and 29' which would otherwise result from the contact of the foreign matters thereto can advantageously avoided by the provision of the shielding sleeves 30 and 31 and the removal manhole 32.

The stroke of movement of the cylinder 11 is such that, when the cylinder 11 is upwardly shifted, the nozzle of the cylinder 11 reaches a height level with the manhole 32. Therefore, not only can any possibility of the intrusion of foreign matters be avoided, but also the energy saving and the prolonged life of mechanically sliding component parts can be attained. Moreover, the removal of the unnecessary plasticized record material can be carried out in a short period of time and, therefore, not only can any possible deterioration of the record material inside the nozzle be avoided, but also the re-start of the press work can be facilitated. Although in general the upright injection-compression pressing machine tends to result in the positioning of the upper fixed plate 2 at a position higher than the eye level of the attendant worker, this possibility can be eliminated by providing the manhole 32 at a position sufficient to permit the attendant worker to conveniently perform the removal of the unnecessary record material with the improved workability and safety factor.

Referring now to Figs. 3, 5, 7 and 8, the details of the biasing force adjusting mechanism identified by 38 will be described. Fig. 8 illustrates the details of the biasing force adjusting mechanism 38 when the nozzle 26 shown in Figs. 3 and 5 is fitted under pressure into the nozzle socket 28. This adjusting mechanism 38 comprises a compression spring 37 accommodated in a holder 42 rigidly mounted on the upper surface of the upper fixed plate 2. A spindle 40 has a threaded upper end threadingly engaged in a projection fast with the drive cylinder 12 and a lower end inserted in the holder 42 and held in contact with the compression spring 37, a substantially intermediate portion of said spindle 40 having a manipulatable ring 39 integrally formed therewith. Additionally there is a lock nut for avoiding the loosening of the spindle 40. When the nozzle 26 is fitted under pressure into the nozzle socket 28 as described with reference to Fig. 3, this pressure corresponds to the total weight of the cylinder 11, the holder assembly 13, the screw drive means 25, the drive cylinders 12 and 12' and their associated parts and amounts to about 500 to 1,000kg. Specifically, this pressure is increased when the drive cylinders 12 and 12' exert the descending force and, therefore, it is problematic to impose such a weight on the nozzle socket 28 in terms of the physical strength. Since the nozzle socket 28 serves to tightly contact the stamper 29 to the associated mold, the stamper 29 will undesirably be forced to separate from the mold when the excessive weight acts on the nozzle socket accompanied by a possible deformation of the mold 8. In view of the above about 200kg is generally considered sufficient for the contact pressure between the nozzle 26 and the nozzle socket 28 in the case of the ordinary injection molding machine. In the present invention, the provision of the biasing force adjusting mechanism 38 permits the contact pressure between the nozzle 26 and the nozzle socket 28 to be adjusted to about 200kg. Specifically, this is possible by turning the manipulatable ring 39 to adjust the contact pressure between the spindle 40 and the compression spring 37. It is to be noted that since the contact pressure of the nozzle varies with the molding condition and/or the type of the record material and should, therefore, be adjusted by turning the manipulatable ring 39 fast with the spindle 40.

The upright injection-compression pressing machine of the construction hereinbefore described operates in the following manner to make an information carrier disc.

Assuming that the mold 7 has been upwardly shifted by the upward movement of the ram 5 or by the high speed elevating auxiliary cylinder (not shown) from the removal position in which the shaped disc can be removed to the injection position as shown in Fig. 3, the supply of a hydraulic medium from the hydraulic pressure generator system (not shown) to the cylinders 23 and 23' shown in Fig. 3 is initiated to allow the piston rods 21 and 21' to descend together with the feed screw 20. As the feed screw 20 descends incident to the downward movement of the piston rods 21 and 21', a metered amount of the plasticized record material staying inside the lower portion of the injection cylinder 11 is injected in between the molds 7 and 8 as shown in Fig. 5(a). After the piston rods 21 and 21' have completed their downward movement and the plasticized record material has been injected as shown in Fig. 5(a), the cylinder 6 shown in Fig. 1 is fed with a hydraulic medium, for instance, oil necessary to generate a clamping force by which the ram 5 is upwardly shifted to clamp the molds 7 and 8 together with the plasticized record material held therebetween.

After a predetermined time during which the compressed record material between the molds 7 and 8 is cooled and then hardened, the ram 5 is downwardly shifted to allow the mold 7 to separate from the mold 8. At this time, the compressed record material, i.e., the information carrier disc, is retained by any known holding means to either of the molds 7 or 8 or in a space between the molds 7 and 8 and is subsequently removed out of the clearance between the molds 7 and 8 by means of any suitable removal device.

The screw 20 which had completed the injection of the record material when held at the position shown in Fig. 5b is rotated by the screw drive means 25 and the piston rods 21 and 21' are upwardly shifted gradually by the effect of the hydraulic pressure. During this time, in readiness for the next succeeding cycle of injection and molding, the fusion of the material from a hopper 14 shown in Fig. 2 and the metering and storage of the plasticized record material in the lower end of the injection cylinder 11 take place.

During the servicing including the replacement of the feed screw and the cleaning of the interior of the cylinders, a hydraulic medium is supplied in part to the elevating fluid passages 16 and 16' to cause the cylinders 12 and 12' to elevate together with the injection cylinder 11 until the tip of the nozzle 26 is separated upwardly away from the opening 27 in the upper fixed plate 2. Subsequently, by releasing the lock mechanism (not shown) interposed between the holder assembly 13 and the drive cylinders 12 and 12', the injection cylinder 11 is tilted as shown in Fig. 6. It is to be noted that, in the condition shown in Fig. 6, the cylinders 12 and 12' have been downwardly shifted while the injection cylinder 11 is tilted, so that the servicing can readily be performed at a height convenient for the attendant worker to reach the screw and/or the interior of the cylinder 11.

Fig. 7 illustrates the condition in which, for the purpose of the removal of the unnecessary plasticized record material 34, 35 from the injection cylinder 11, the drive cylinders 12 and 12' are operated to upwardly shift the injection cylinder 11 until the nozzle 26 is held in position above the manhole 32 and the removal tray 33 is subsequently inserted into the manhole 32 to a position immediately below the nozzle 26.

As shown in Fig. 7, the lower end of the spindle 40 of the biasing force adjusting mechanism 38 is separated from the compression spring 37. However, as the drive cylinders 12 and 12' descend with the nozzle 26 approaching the nozzle socket 28, the lower end of the spindle 40 contacts the compression spring 37 to compress the compression spring 37 until the condition shown in Fig. 3 is established, thereby reducing the contact pressure between the nozzle 26 and the nozzle socket 28.

Because of the construction described above, irrespective of the size of the clearance between the lower and upper molds 7 and 8, the record material can uniformly be distributed towards the periphery of any one of the molds 7 and 8 from the central portion. In addition, even when the clamping of the molds 7 and 8 is carried out after the lapse of the time during which the molds are heated subsequent to the injection of the record material, there is no possibility that the injected record material flows by its own weight in one direction such as occurring in the prior art machine. In view of this, the molding conditions including the size of the clearance between the molds during the injection of the record material, the timing at which the molds are to be clamped together, and/or heating and cooling conditions can be selected as desired and the information carrier disc of high quality can, therefore, be manufactured under an optimum condition appropriate to the selected record material.

Moreover, since the required floor space for the installation of the injection-compression pressing machine according to the present invention corresponds to the bottom surface area of the mold clamper assembly and since the movable component parts of both of the injector and clamper assemblies provide a vertically downwardly acting weight, no substantial bending force act on the tie bars and the guide structure and, therefore, the individual component parts can be compact in size so that the overall weight and size of the machine as a whole can be reduced with the reduced floor space required for the installation thereof.

Since the second and third drive means for reciprocately driving the injection cylinder and the feed screw are arranged in parallel relation to each other, the height of the machine as a whole can advantageously be reduced.

In particular, the upright injection-compression pressing machine according to the present invention is advantageous in that it can be installed at a limited floor space such as within the cleaned room designed for the production of the information carrier discs of high quality.

Since the centering of the upper and lower molds 8 and 7 is carried out by the utilization of the guide pins without relying on the guide preciseness of the tie bars while the lower mold 7 is made movable in the horizontal direction together with the movable plate 4, the molds 8 and 7 can be precisely centered.

By the provision of the shielding sleeves 30 and 31 and the manhole 32 in association with the removal tray 33, any possible intrusion of foreign matters and/or dirty oil into between the stampers 29 and 29' through the opening in the nozzle socket 28 can advantageously be avoided, thereby enabling the molding of the information carrier discs of high quality and also permitting the stampers 29 and 29' to be utilized repeatedly for a long period of time for the production of a number of the information carrier discs.

By the provision of the biasing force adjusting mechanism between the upper fixed plate 2 and the movable mechanism around the cylinders, no excessive weight is imposed on the nozzle and both of the nozzle socket and the molds, thereby reducing the possibility of a fixing mechanism between the nozzle socket and the molds being damaged and also minimizing the deformation of the molds. Where the nozzle socket is so designed as to serve as a means for securing the respective stamper to the associated mold, the force necessary to fix the stamper to the associated mold can be stabilized. Furthermore, even though the molding conditions and/or the type of the record material vary, the contact pressure acting on the nozzle can simply be adjusted as desired.

## Claims

1. An injection molding machine for the manufacture of an information carrier disc, which comprises a pair of fixed plates (1, 2) spaced apart from each other in face-to-face relation and connected by means of tie bars (3, 3'), a first mold (8) carried by the first fixed plate (2), a movable plate (4) movable between the fixed plates (1, 2) while guided by the tie bars (3, 3'), a second mold (7) carried by the movable plate (4) in face-to-face relation to the first mold (8), a first drive means (5, 6) mounted on the second fixed plate (1) and operatively coupled with the movable plate (4) for controlling the spacing between the first and second molds (8, 7), and an injection cylinder (11) displaceable in a direction axially of the first mold (8) towards and away from the first mold (8), characterized in that said fixed plates (1, 2) are lower and upper fixed plates (1, 2) positioned one above the other while the first and second molds (8, 7) are upper and lower molds (8, 7) positioned one above the other, said first drive means (5, 6) being provided on the lower fixed plate (1) and operatively coupled with the movable plate (4) for moving the movable plate (4) to any one of first, second and third positions wherein the carrier disc can be removed out of the clearance between the upper and lower molds (8, 7), wherein the upper and lower molds (8, 7) are spaced a small distance from each other, and wherein the upper and lower molds (8, 7) are clamped together, respectively, and in that there are provided guide members (9, 9') mounted on the upper fixed plate (2) so as to extend upwards, a holder assembly (13) for the injection cylinder (11) slidably and rotatably mounted on the guide members (9, 9'), a second drive means (12, 12') for driving the holder assembly (13) along the guide members (9, 9'), said injection cylinder (11) being supported as to extend vertically and having a rear end extending through the holder assembly (13), said injection cylinder (11) having a feed screw (20) built therein, a screw drive means (25) coupled with an upper end of the screw (20), a third drive means (25) provided in the holder assembly (13) for reciprocately driving the screw (20), a through-hole (27) defined in the upper fixed plate (22) in communication with a nozzle socket (28) defined centrally in the upper mold (8), a first shielding sleeve (31) mounted on the upper fixed plate (2) so as to exteriorly surround the through-hole (27), and a second shielding sleeve (30) having one end secured adjacent a nozzle (26) of the injection cylinder (11) and the other and opened, and having its diameter gradually increasing from said one end towards said other end, whereby when the holder assembly (13) is lowered by said second drive means (12), the nozzle (26) of the injection cylinder (11) abuts against the nozzle socket (28) so that a molding material can be supplied from the center of a disc forming portion of the upper mold (8), and at the same time, the other end of the second shielding sleeve (30) closes an end of the first shielding sleeve (31).

2. A machine as claimed in claim 1, wherein each of said second and third drive means (12, 25) is constituted by a separate hydraulic drive mechanism, the hydraulic drive·mechanisms of said second and third drive means (12, 25) being arranged in parallel relation to each other substantially at the same height.

3. A machine as claimed in claim 1, wherein said second drive means comprises drive cylinders (12, 12') slidably provided on the guide members (9, 9'), piston members (15, 15') rigidly secured to the guide members (9, 9') so as to divide the interiors of the drive cylinders (12, 12') into two portions, means (16, 16', 17, 17') for selectively supplying a hydraulic pressure into the interiors of the respective cylinders so divided by the piston members (15, 15'), and the injection cylinder holder assembly (13) connecting the drive cylinders (12, 12') together.

4. A machine as claimed in claim 1, wherein the injection cylinder holder assembly (13) carries a pair of piston rods (21, 21') and hydraulic cylinders (23, 23') so as to extend in the vertical direction, said piston rods (21, 21') and the upper end of the feed screw (20) being connected to each other through the screw drive means (25) to move the feed screw (20) reciprocately.

5. A machine as claimed in claim 1, wherein said upper fixed plate (2) has a manhole (32) defined therein at a position intermediately of the thickness of the upper fixed plate (2) so as to extend in a direction perpendicular to the injection cylinder (11), and unnecessary plasticized material remaining inside the injection cylinder (11) being adapted to be removed from said manhole (32).

6. A machine as claimed in claim 1, further comprising a biasing force adjusting mechanism (38) positioned between a portion of a mechanism movable together with the injection cylinder (11) and the upper fixed plate (2) for adjusting the contact pressure between the nozzle (26) of the injection cylinder (11) and said nozzle socket (28).

**Revendications**

1. Machine de moulage par injection destinée à la fabrication d'un disque de support d'informations, qui comprend deux plateaux fixes (1, 2) distants l'un de l'autre et placés face à face, les plateaux étant raccordés par des tirants (3, 3'), un premier moule (8) porté par le premier plateau fixe (2), un plateau (4) mobile entre les plateaux fixes (1, 2) et guidé par les tirants (3, 3'), un second moule (7) porté par le plateau mobile (4) en face du premier moule (8), un premier dispositif de manoeuvre (5, 6) monté sur le second plateau fixe (1) et couplé lors du fonctionnement au plateau mobile (4) afin qu'il règle la distance comprise entre le premier et le second moule (8, 7), et un cylindre d'injection (11) mobile en direction de l'axe du premier moule (8) en translation par rapport au premier moule (8), caractérisée en ce que les plateaux fixes (1, 2) sont des plateaux fixes inférieur et supérieur (1, 2) placés l'un au-dessus de l'autre alors que le premier et le second moule (8, 7) sont des moules supérieur et inférieur (8, 7) placés l'un au-dessus de l'autre, le premier dispositif de manoeuvre (5, 6) étant disposé sur le plateau inférieur fixe (1) et étant couplé au plateau mobile (4) afin que celui-ci soit déplacé vers l'une quelconque d'une première, d'une seconde et d'une troisième position dans lesquelles le disque de support peut être retiré de l'espace compris entre les moules supérieur et inférieur (8, 7), les moules supérieur et inférieur (8, 7) sont séparés l'un de l'autre par une petite distance, et les moules supérieur et inférieur (8, 7) sont serrés l'un contre l'autre, respectivement, et en ce qu'elle comporte des organes de guidage (9, 9') montés sur le plateau supérieur fixe (2) afin qu'ils en dépassent vers le haut, un ensemble (13) de maintien du cylindre d'injection (11) monté sur les organes de guidage (9, 9') afin qu'il puisse coulisser et se déplacer en rotation, un second dispositif de manoeuvre (12, 12') destiné à déplacer l'ensemble de maintien (13) le long des organes de guidage (9, 9'), le cylindre d'injection (11) étant supporté afin qu'il soit disposé verticalement et ayant une extrémité arrière passant dans l'ensemble de maintien (13), le cylindre d'injection (11) ayant une vis (20) d'avance qui y est placée, un dispositif (25) de manoeuvre de vis couplé à l'extrémité supérieure de la vis (20), un troisième dispositif de manoeuvre (25) disposé dans l'ensemble de maintien (13) et destiné à manoeuvrer alternativement la vis (20), un trou débouchant (27) délimité dans le plateau supérieur fixe (22) et communiquant avec un logement (28) de buse délimité au centre du moule supérieur (8), un premier manchon protecteur (31) monté sur le plateau supérieur fixe (2) afin qu'il entoure extérieurement le trou débouchant (27), et un second manchon protecteur (30) ayant une première extrémité fixée près d'une buse (26) du cylindre d'injection (11) et son autre extrémité ouverte, son diamètre augmentant progressivement de la première extrémité vers l'autre extrémité, si bien que, lorsque l'ensemble de maintien (13) est abaissé par le second dispositif de manoeuvre (12), la buse (26) du cylindre d'injection (11) est en butée contre le logement (28) de la buse et qu'une matière de moulage peut être transmise à partir du centre d'une partie de formation de disque du moule supérieur (8) et, simultanément, l'autre extrémité du second manchon protecteur (30) ferme une extrémité du premier manchon protecteur (31).

2. Machine selon la revendication 1, dans laquelle chacun des second et troisième dispositifs de manoeuvre (12, 25) est constitué par un mécanisme hydraulique séparé, les mécanismes du second et du troisième dispositif de manoeuvre (12, 25) étant disposés parallèlement l'un à l'autre pratiquement à la même hauteur.

3. Machine selon la revendication 1, dans laquelle le second dispositif de manoeuvre comprend des vérins (12, 12') qui peuvent coulisser sur les organes de guidage (9, 9'), des pistons (15, 15') rigidement fixés aux organes de guidage (9, 9') afin qu'ils divisent l'intérieur des vérins de manoeuvre (12, 12') en deux parties, un dispositif (16, 16', 17, 17') de transmission sélective de fluide hydraulique sous pression à l'intérieur des vérins respectifs ainsi divisés par les pistons (15, 15'), et l'ensemble (13) de maintien du cylindre d'injection reliant les vérins (12, 12') l'un à l'autre.

4. Machine selon la revendication 1, dans laquelle l'ensemble (13) de maintien du cylindre d'injection porte deux tiges de piston (21, 21') et des cylindres hydrauliques (23, 23') destinés à être en direction verticale, les tiges des pistons (21, 21') et l'extrémité supérieure de la vis (20) d'avance étant raccordées mutuellement par l'intermédiaire du dispositif (25) de manoeuvre à vis afin que la vis (20) d'avance soit déplacée alternativement.

5. Machine selon la revendication 1, dans laquelle le plateau supérieur fixe (2) a un trou (32) délimité à l'intérieur entre ses extrémités dans la direction de l'épaisseur du plateau supérieur fixe (2) afin que le trou soit perpendiculaire au cylindre d'injection (11), de la matière plastifiée superflue restant dans le cylindre d'injection (11) étant destinée à être extraite par ce trou (32).

6. Machine selon la revendication 1, comprenant en outre un mécanisme (38) de réglage d'une force de rappel placé entre une partie du mécanisme mobile avec le cylindre d'injection (11) et le plateau supérieur fixe (2) afin qu'il règle la pression de contact entre la buse (26) du cylindre d'injection (11) et le logement (28) de la buse.

**Patentansprüche**

1. Spritzgußmaschine zum Herstellen einer Informationsträgerscheibe mit zwei festen Platten (1, 2), die voneinander entfernt und einander gegenüberstehend angeordnet und mittels Verbindungsstangen (3, 3') miteinander verbunden sind, einer ersten, von der ersten festen Platte (2) getragenen Gußform (8), einer beweglichen Platte (4), die zwischen den festen Platten (1, 2) bewegbar und von den Verbindungsstangen (3, 3') geführt ist, einer zweiten Gußform (7), die von der beweglichen Platte (4) gegenüberstehend zur ersten Gußform (8) getragen wird, einer ersten Antriebseinrichtung (5, 6), die an der zweiten festen Platte (1) befestigt ist und mit der beweglichen Platte (4) zum Steuern des Abstandes zwischen der ersten und zweiten Gußform (8, 7) betriebsmäßig verbunden ist, und einem Einspritzzylinder (11), der in Richtung axial zur ersten Gußform (8) zu und von der ersten Gußform (8) verschiebbar ist, dadurch gekennzeichnet, daß die festen Platten (1, 2) untere und obere feste Platten (1, 2) sind, die übereinander angeordnet sind, wobei die erste und zweite Gußform (8, 7) obere und untere Gußformen (8, 7) und übereinander angeordnet sind, daß die erste Antriebseinrichtung (5, 6) an der unteren festen Platte (1) angeordnet und betriebsmäßig mit der beweglichen Platte (4) verbunden ist, um die bewegliche Platte in eine beliebige erste, zweite und dritte Stellung zu bewegen, in der die Trägerscheibe aus dem Spalt zwischen der oberen und unteren Gußform (8, 7) entfernt werden kann, wobei die obere und untere Gußform (8, 7) in einem kleinen Abstand zueinander entfernt bzw. in der die obere und untere Gußform (8, 7) zusammengespannt sind, und daß Führungsteile (9, 9') vorgesehen sind, die auf der oberen festen Platte (2) befestigt sind, so daß sie sich nach oben erstrecken, eine Trägerbaugruppe (13) für den Einspritzzylinder (11) an den Führungsteilen (9, 9') gleitend und rotierend befestigt ist und eine zweite Antriebseinrichtung (12, 12') zum Antrieb der Trägerbaugruppe (13) entlang den Führungsteilen (9, 9') vorgesehen ist, wobei der Einspritzzylinder (11) so gelagert ist, daß er sich senkrent erstreckt und sein rückwärtiges Ende sich durch die Trägerbaugruppe (13) erstreckt, wobei in dem Einspritzzylinder (11) eine Vorschubspindel (20) eingebaut ist, ein Vorschubspindelantrieb (25) mit einem oberen Ende der Spindel (20) verbunden ist, eine dritte Antriebseinrichtung (25) in der Trägerbaugruppe (13) zum wechselseitigen Antrieb der Spindel (20) vorgesehen ist, eine Durchgangsbohrung (27) in der oberen festen Platte (2) ausgebildet ist und in Verbindung mit einer Düsenfassung (28) steht, die mittig in der oberen Gußform (8) ausgebildet ist, eine erste Schirmhülse (31) auf der oberen festen Platte (2) so befestigt ist, daß sie die Durchgangsbohrung (27) außen umgibt, und ein Ende einer zweiten Schirmhülse (30) nahe einer Düse (26) des Einspritzzylinders (11) befestigt ist, während das andere Ende offen ist und ihr Durchmesser graduell von dem einen Ende in Richtung auf das andere Ende anwächst, wobei, wenn die Trägerbaugruppe (13) mittels der zweiten Antriebseinrichtung (12) abgesenkt wird, die Düse (26) des Einspritzzylinders (11) gegen den Düsensockel (28) stößt, so daß Spritzgußmaterial von der Mitte eines scheibenformenden Abschnittes der oberen Gußform (8) zugeführt werden kann und gleichzeitig das andere Ende der zweiten Schirmhülse (30) ein Ende der ersten Schirmhülse (31) schließt.

2. Maschine nach Anspruch 1, dadurch gekennzeichnet, daß sowohl die zweite als auch die dritte Antriebseinrichtung (12, 25) durch einen separaten hydraulischen Antriebsmechanismus gebildet sind, wobei die hydraulischen Antriebsmechanismen der zweiten und dritten Antriebseinrichtung (12, 25) parallel zueinander im wesentlichen in gleicher Höhe angeordnet sind.

3. Maschine nach Anspruch 1, dadurch gekennzeichnet, daß die zweite Antriebseinrichtung Antriebszylinder (12, 12') enthält, die gleitend auf den Führungsteilen (9, 9') vorgesehen sind, daß Kolbenelemente (15, 15') steif an den Führungsteilen (9, 9') befestigt sind, um so das Innere der Antriebszylinder (12, 12') in zwei Abschnitte zu unterteilen, daß eine Einrichtung (16, 16', 17, 17') selektiv einen hydraulischen Druck in das Innere der entsprechenden, durch die Kolbenelemente (15, 15') unterteilten Zylinder abgibt und daß die Einspritzzylinder-Trägerbaugruppe (13) die Antriebszylinder (12, 12') miteinander verbindet.

4. Maschine nach Anspruch 1, dadurch gekennzeichnet, daß die Einspritzzylinder-Trägerbaugruppe (13) zwei Kolbenstagen (21, 21') und hydraulische Zylinder (23, 23') trägt, die sich in vertikaler Richtung erstrecken, und daß die Kolbenstange (21, 21') und das obere Ende der Vorschubspindel (20) miteinander durch die Spindelantriebseinrichtung (25) verbunden sind, um die Vorschubspindel (20) wechselseitig zu bewegen.

5. Maschine nach Anspruch 1, dadurch gekennzeichnet, daß in der oberen festen Platte (2) eine Durchlaßöffnung (32) in einer Lage zwischenliegend über die Dicke der oberen festen Platte (2) ausgebildet ist, so daß sie sich in Richtung senkrecht zum Einspritzzylinder (11) erstreckt, wobei unnötig plastifiziertes Material, das im Inneren des Einspritzzylinders (11) verbleibt, aus der Durchgangsöffnung (32) entfernt werden kann.

6. Maschine nach Anspruch 1, dadurch gekennzeichnet, daß ein Vorspannkraft-Einstellmechanismus (38) vorgesehen und zwischen einem Abschnitt eines zusammen mit dem Einspritzzylinder (11) beweglichen Mechanismus und der oberen festen Platte (2) zum Einstellen des Kontaktdruckes zwischen der Düse (26) des Einspritzzylinders (11) und dem Düsensockel (28) angeordnet ist.

*Fig. 1*

*Fig. 2*

Fig. 3

Fig. 4

*F i g .  5 (a)*

Fig. 5(b)

Fig. 6

Fig. 8

*Fi g. 7(a)*

*Fi g. 7(b)*

Fig. 9